# EUROPEAN PATENT APPLICATION

(11) **EP 4 539 200 A2**
(43) Date of publication of application: **16.04.2025**
(21) Application number: 24199634.7
(22) Date of filing: 11.09.2024
(51) Int. Cl.: H01M 10/42, H01M 10/48, H01M 50/284, H01M 50/507

(54) **ELECTRICAL MODULE AND BATTERY PACK**

(30) Priority: 10.10.2023 CN 202311308569; 10.10.2023 CN 202322718560 U; 24.06.2024 WO PCT/CN2024/100964
(71) Applicant: Eve Energy Co., Ltd., Huizhou, Guangdong 516006 (CN)
(72) Inventor: LIAO, Hulong, Huizhou, Guangdong, 516006 (CN)
(74) Representative: Murgitroyd & Company

(57) **Abstract**

The present disclosure provides an electric module (1) and a battery pack (100). The electric module (1) includes a cells contact system (11), a battery managing unit (12), and a cell supervision circuit (13). The cells contact system (11) collects one or more voltage signals and/or one or more temperature signals of the cell groups (21) in a battery module (2). The cell supervision circuit (13) includes one or more analog front ends (131) configured to convert one or more analog signals of the battery module (2) collected by the cells contact system (11) into one or more digital signals. The analog front ends (131) are communicatively connected to the battery management unit (12). The cell supervision circuit (13) is connected directly with the cells contact system (11).

## Description

### TECHNICAL FIELD

The present disclosure relates to the technical field of batteries, and more particularly, to an electrical module and a battery pack.

### BACKGROUND

In a battery pack, a CCS (Cells Contact System) is generally used to realize series and parallel connections of cells, as well as battery temperature sampling and cell voltage sampling functions. A sampling signal is transmitted to a BMS (Battery Management System) through a cable, and an AFE (Analog Front End) module in the BMS processes and converts it into a digital signal, and the BMS then processes the digital signal. In this manner, an intermediate converter cable needs to be provided between the CCS and the AFE. Because the current electrical architecture generally transmits the analog signals collected from the cells to the BMS through tens of hundreds of cables, when the BMS is of an integrated type and the BMS is far away from the CCS collection interface, the distance between the CCS and the AFE is relatively long, and the length of the intermediate converter cable is increased, and data accuracy of the collected voltage and temperature is affected due to long-distance transmission.

### SUMMARY

The present invention is defined by the independent claims as appended. Developments are set forth in the dependent claims.

Embodiments of the present disclosure provides an electrical module and a battery pack, which may shorten one or more transmission paths of one or more analog signals between a cells contact system and one or more analog front ends, and improve the accuracy of voltage and temperature collections.

According to a first aspect, an embodiment of the present disclosure provides an electrical module including:
a cells contact system configured to collect one or more voltage signals and/or one or more temperature signals of a number of cell groups in a battery module;
a battery management unit; and
a cell supervision circuit including one or more analog front ends configured to convert one or more analog signals of the battery module collected by the cells contact system into one or more digital signals, the one or more analog front ends being communicatively connected to the battery management unit;
wherein the cell supervision circuit is connected directly with the cells contact system.

In one embodiment, the cell supervision circuit is connected directly with the cells contact system through a plugging unit.

In one embodiment, the plugging unit includes a plug and a receptacle, one of the plug and the receptacle being disposed in the cells contact system and another one of the plug and the receptacle being disposed in the cell supervision circuit, the plug being plugged into and mated with the receptacle.

In one embodiment, the cells contact system includes an integrated busbar disposed on the battery module, the integrated busbar including:
a bracket disposed on the battery module;
a plurality of aluminum bars, each of the aluminum bars connecting two adjacent cells in the battery module; and
a flexible circuit board assembly disposed on the bracket, the flexible circuit board assembly including a circuit board and a plurality of temperature measuring units, the plurality of temperature measuring units being electrically connected to the circuit board, the circuit board being connected to the aluminum bars through one or more nickel sheets, each of the temperature measuring units being disposed on one of the aluminum bars;
wherein the plugging unit is disposed between the circuit board and the cell supervision circuit.

In one embodiment, the cell supervision circuit includes a plurality of the analog front ends configured to convert all of the voltage signals and/or the temperature signals within a single said battery module.

In one embodiment, the one or more analog front ends are communicatively connected to the battery management unit through one or more daisy-chain communication cables.

In one embodiment, the battery management unit is disposed separately from the cell supervision circuit.

In one embodiment, the cell supervision circuit is disposed on one side of the battery module in a first direction;
the battery management unit is disposed on one side of the battery module in a second direction.

In one embodiment, there is further included a high-voltage control unit communicatively connected to the battery management unit through a daisy-chain communication cable to transmit one or more collected high-voltage loop signals to the battery management unit.

In one embodiment, the electrical module further includes a battery disconnect unit, wherein:
the battery disconnect unit is connected to a charging interface of a battery pack through a hard copper bar; and/or
the battery disconnect unit is connected to a discharging interface of the battery pack through the hard copper bar; and/or
the battery disconnect unit is connected to an accessory interface of the battery pack through the hard copper bar.

In one embodiment, the battery disconnect unit has a positive joint connected to a positive terminal of the battery module through a first copper-aluminum composite bar and a negative joint connected to a negative terminal of the battery module through a second copper-aluminum composite bar.

In one embodiment, the first copper-aluminum composite bar and the second copper-aluminum composite bar are both composed of an aluminum bar and a copper bar, a material of the aluminum bar is 1060 O-state aluminum, and a material of the copper bar is red copper soft copper bar; and/or
the first copper-aluminum composite bar and the second copper-aluminum composite bar are both composed of an aluminum bar and a copper bar, the aluminum bar is connected to a positive terminal or a negative terminal of the battery module by welding, and the copper bar is connected to a positive joint or a negative joint of the battery disconnect unit by bolts.

According to a second aspect, an embodiment of the present disclosure further provides a battery pack including:
one or more battery modules;
cells contact system configured to collect one or more voltage signals and/or one or more temperature signals of the one or more battery modules; and
the electric module as described above communicatively connected with the cells contact system.

In one embodiment, the battery pack further includes a plurality of the battery modules connected in series;
wherein the battery disconnect unit of the electrical module includes a main fuse connected in series between two adjacent ones of the battery modules.

In one embodiment, the battery pack has a charging interface and a discharging interface;
the battery pack being formed with a discharging loop which passes sequentially through a positive electrode of the discharging interface, a discharging positive electrode of the battery disconnect unit, a main positive relay of the battery disconnect unit, a battery input positive electrode of the battery disconnect unit, a global positive electrode of the battery modules, the battery modules, a main fuse of the battery disconnect unit, the battery modules, a global negative electrode of the battery modules, a battery input negative electrode of the battery disconnect unit, a current sensor, a main negative relay of the battery disconnect unit, a discharging negative electrode of the battery disconnect unit, and a negative electrode of the discharging interface.

In one embodiment, the battery pack has a charging interface and a discharging interface;
the battery pack being formed with a charging loop which passes sequentially through a positive electrode of the charging interface, a charging positive electrode of the battery disconnect unit, a fast charging relay of the battery disconnect unit, a main positive relay of the battery disconnect unit, a battery input positive electrode of the battery disconnect unit, a global positive electrode of the battery modules, the battery modules, a main fuse of the battery disconnect unit, the battery modules, a global negative electrode of the battery modules, a battery input negative electrode of the battery disconnect unit, a current sensor, a main negative relay of the battery disconnect unit, a discharging negative electrode of the battery disconnect unit, and a negative electrode of the charging interface.

### Advantageous effects of embodiments of the present disclosure:

In the embodiments of the present disclosure, one or more voltage signals and/or one or more temperature signals of one or more battery modules are collected by a cells contact system, and one or more analog front ends are disposed in a cell supervision circuit. Because a port of the cell supervision circuit is relatively close to a collecting interface of the cells contact system, the cells contact system may be communicatively connected with the cell supervision circuit by means of direct connection, and the analog voltage and/or temperature signals collected by the cells contact system are converted into digital signals by the analog front ends and transmitted to a battery management unit after being transmitted to the cell supervision circuit. With this arrangement, the transmission paths of the analog signals between the cells contact system and the analog front ends are shortened, thereby reducing transmission path interference and improving the accuracy of voltage and temperature collections.

### BRIEF DESCRIPTION OF THE DRAWINGS

In order that the technical solutions in the embodiments of the present disclosure may be more clearly described, reference will now be made briefly to the accompanying drawings required for the description of the embodiments. It will be apparent that the accompanying drawings in the following description are only some of the embodiments of the present disclosure, and that other drawings may be obtained by a person skilled in the art based on these drawings without exerting creative efforts.
FIG. 1 is a schematic diagram of a structure of a battery pack (electrical architecture layout) according to an embodiment of the present disclosure;
FIG. 2 is a schematic diagram of a structure of a battery pack according to an embodiment of the present disclosure;
FIG. 3 is a block diagram of an electrical module according to an embodiment of the present disclosure;
FIG. 4 is an enlarged schematic view of part A in FIG. 2;
FIG. 5 is an enlarged schematic view of part B in FIG. 2;
FIG. 6 is a high-voltage electrical schematic diagram of a battery pack according to an embodiment of the present disclosure.

The names of components corresponding to respective reference numerals in the accompanying drawings are as follows: battery pack 100, electrical module 1, cells contact system 11, integrated busbar 111, bracket 1111, aluminum bar 1112, flexible circuit board assembly 1113, circuit board 11131, temperature measuring unit 11132, battery management unit 12, cell supervision circuit 13, plugging unit 14, plug 141, receptacle 142, high-voltage control unit 15, battery disconnect unit 16, main fuse 161, main positive relay 162, main negative relay 163, fast charging relay 164, current sensor 165, first copper-aluminum composite bar 17, second copper-aluminum composite bar 18, battery module 2, charging interface 2a, discharging interface 2b, accessory interface 2c, cell group 21, first direction F1, and second direction F2.

### DETAILED DESCRIPTION

The technical solutions in the embodiments of the present disclosure will be described in a clear and complete manner with reference to the accompanying drawings. Obviously, the described embodiments are only some of the embodiments of the present disclosure, but not all of the embodiments. Based on the embodiments of the present disclosure, all other embodiments obtained by those skilled in the art without making creative efforts fall within the scope of protection of the present disclosure. In addition, it should be understood that the specific embodiments described herein are only used to illustrate and explain the present disclosure, and are not intended to limit the present disclosure. In the present disclosure, unless otherwise specified, the directional words used such as "upper" and "lower" usually refer to the top and bottom of a device in actual use or working conditions, specifically to the directions shown in the drawings; while "inside" and "outside" refer to the outline of the device.

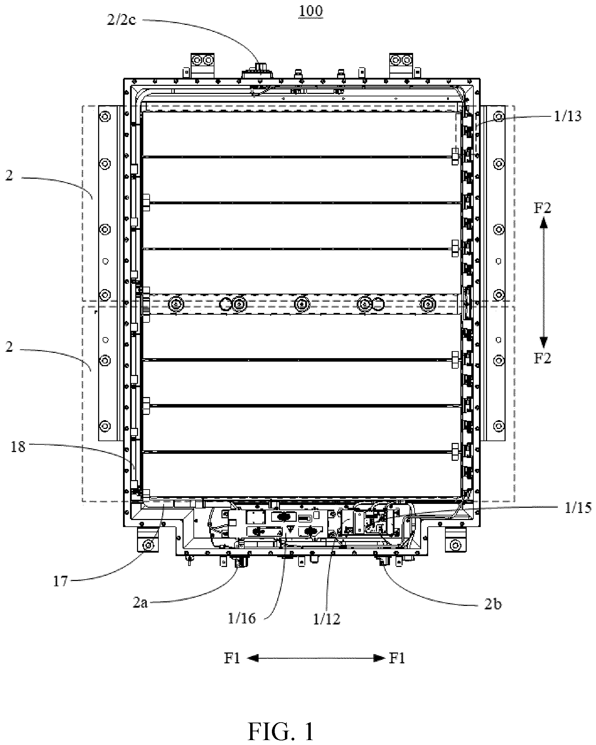

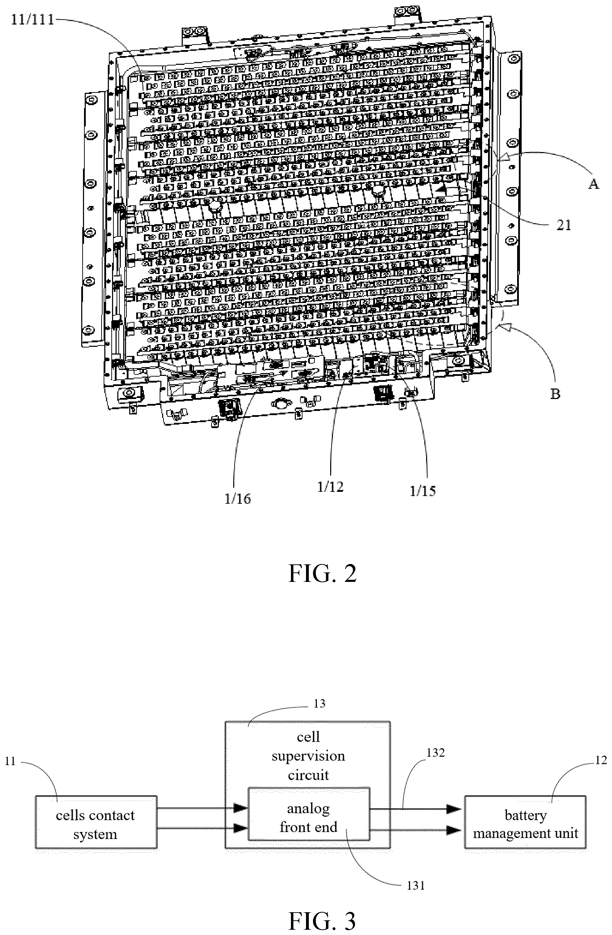

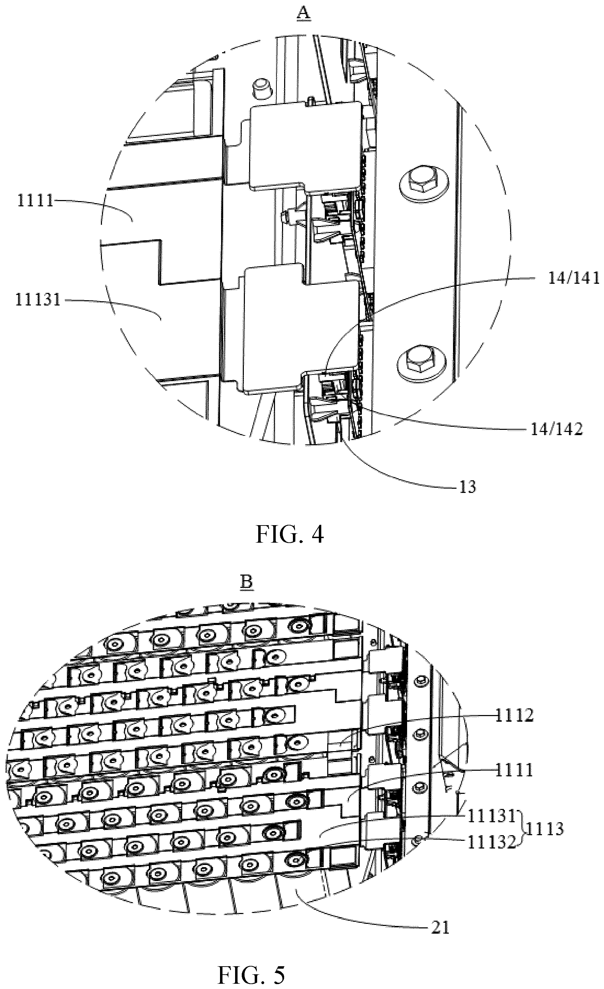

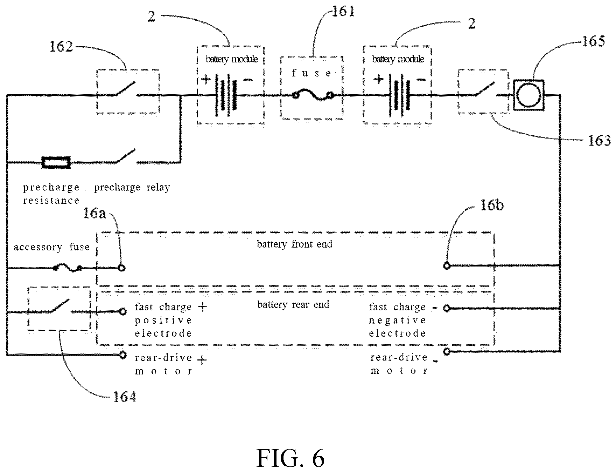

According to a first aspect, an embodiment of the present disclosure provides an electrical module 1. FIG. 1 is a schematic diagram of a structure of an electrical architecture layout of a battery pack according to an embodiment of the present disclosure, FIG. 2 is a schematic diagram of a structure of a battery pack according to an embodiment of the present disclosure, FIG. 3 is a block diagram of an electrical module 1 according to an embodiment of the present disclosure, FIG. 4 is an enlarged schematic view of part A in FIG. 2, FIG. 5 is an enlarged schematic view of part B in FIG. 2, and FIG. 6 is a high-voltage electrical schematic diagram of a battery pack according to an embodiment of the present disclosure.

Referring to FIGS. 1 to 5, the electric module 1 includes a cells contact system 11, a battery managing unit 12, and a cell supervision circuit 13. The cells contact system 11 collects one or more voltage signals and/or one or more temperature signals of a number of cell groups 21 in a battery module 2. The cell supervision circuit 13 includes one or more analog front ends 131 configured to convert one or more analog signals of the battery module 2 collected by the cells contact system 11 into one or more digital signals. The one or more analog front ends 131 are communicatively connected to the battery management unit 12. Herein, the cells contact system 11 is connected directly with the cell supervision circuit 13.

In the embodiments of the present disclosure, one or more voltage signals and/or one or more temperature signals of the cell groups 21 are collected by a CCS (Cells Contact System) 11, and one or more APEs (Analog Front End) 131 are disposed in a CSC (Cell Supervision Circuit) 13. Because a collection interface of the cells contact system 11 is relatively close to a port of the cell supervision circuit 13, the cells contact system 11 may be communicatively connected with the cell supervision circuit 13 by means of direct connection, and the analog voltage and/or temperature signals collected by the cells contact system 11 are converted into digital signals by the analog front ends 131 and transmitted to a BMU (Battery Management Unit) 12 after being transmitted to the cell supervision circuit 13. With this arrangement, the transmission paths of the analog signals between the cells contact system 11 and the analog front ends 131 are shortened, thereby reducing transmission path interference and improving the accuracy of voltage and temperature collections.

In one embodiment, the cell supervision circuit 13 is connected directly with the cells contact system 11 through a plugging unit 14. As such, the implementation of an electrical architecture arrangement in which the cells contact system 11 is connected directly with the electrical module 1 may shorten the transmission distances of analog voltage and/or temperature signals, and may reduce the use of transmission cables, and improve the space utilization of the battery pack 100.

The present disclosure does not limit the specific form of the plugging unit 14. With further reference to FIG. 3, in one embodiment, the plugging unit 14 includes a plug 141 and a receptacle 142. One of the plug 141 and the receptacle 142 is disposed in the cells contact system 11, and another one of the plug 141 and the receptacle 142 is disposed in the cell supervision circuit 13. The plug 141 is plugged into and mated with the receptacle 142. The implementation of the cells contact system 11 being communicatively connected with the cell supervision circuit 13 through the plug 141 and the receptacle 142, and thus the implementation of an electrical architecture arrangement in which the cells contact system 11 is connected in line with the electrical module 1 may shorten the transmission distances of analog voltage and/or temperature signals, and may reduce the use of transmission cables, and improve the space utilization of the battery pack 100.

In one embodiment, the cells contact system 11 includes an integrated busbar 111 disposed on the battery module 2. The integrated busbar 111 includes a bracket 1111, a plurality of aluminum bars 1112, and a flexible circuit board assembly 1113. The bracket 1111 is disposed on the cell groups 21 of the battery module 2. Each of the aluminum bars 1112 connects two adjacent cells in the cell groups 21. The flexible circuit board assembly 1113 is disposed on the bracket 1111. The flexible circuit board assembly 1113 includes a circuit board 11131 and a plurality of temperature measuring units 11132. The plurality of temperature measuring units 11132 are electrically connected to the circuit board 11131 and are configured to measure a temperature of the cell groups 21, for example, a plurality of temperature readings of a plurality of cells within the cell groups 21. The circuit board 11131 is connected to the aluminum bars 1112 through one or more nickel sheets. Herein, the plugging unit 14 is disposed between the circuit board 11131 and the cell supervision circuit 13. That is, the integrated busbar 111 is mainly composed of one or more signal collection modules (FPC, PCB, FFC, etc.), one or more plastic structural members, one or more copper-aluminum bars, and the like, which are connected into a whole by a process such as hot-pressing or riveting, thereby realizing high-voltage series and parallel connections of cells, battery temperature sampling and cell voltage sampling functions, and a simple structure.

In one embodiment, a material of the aluminum bar 1112 of the cells contact system 11 is 1060 O-state aluminum.

In the present disclosure, the specific number of the analog front ends 131 is not limited, and may be selected according to actual products. In one embodiment, the battery module 2 includes a plurality of 23-cell-in-series cell groups. One 23-cell-in-series cell group corresponds to a CSC cell supervision circuit 13. A plurality of AFE analog front ends 131 are disposed in each CSC cell supervision circuit 13. Each AFE may collect voltages of 14 cells in-series. After each cell group collects analog voltage and/or temperature signals through CCS cells contact system 11, the analog signals may be transmitted to the plurality of AFE analog front ends 131 in the CSC, thereby enabling the plurality of analog front ends 131 to convert all of the voltage signals and/or the temperature signals in a single said battery module.

To further reduce the number of cables used, in one embodiment, the analog front ends 131 are communicatively connected to the battery management unit 12 through one or more daisy-chain communication cables 132. That is, after the analog voltage and/or temperature signals collected by the cells contact system 11 are transmitted directly to the cell supervision circuit 13, the analog signals are converted into digital signals by the analog front ends 131, and only two daisy-chain communication cables 132 are needed to transmit the digital signals to the BMU, thus reducing the number of transmission cables.

In the embodiments provided by the present disclosure, the battery management unit 12 is disposed separately from the cell supervision circuit 13.

In one embodiment, the cell supervision circuit 13 is disposed on one side of the battery module 2 in a first direction F1. The battery management unit 12 is disposed on one side of the battery module 2 in a second direction F2. By arranging the cell supervision circuit 13 on one side of the battery module 2 in the first direction F1, spare space of the battery pack 100 in the first direction F1 may be effectively utilized, and the space of the battery pack 100 in the second direction F2 is not occupied, so that more battery modules 2 may be disposed in the second direction F2, thereby improving space utilization of the battery pack 100 in the second direction F2.

Note that in the present embodiment the first direction is a length direction of the battery module, and the second direction is the width direction of the battery module.

In one embodiment, the electrical module 1 further includes a high-voltage control unit 15 communicatively connected to the battery management unit 12 through a daisy-chain communication cable 132 to transmit one or more collected high-voltage loop signals to the battery management unit 12.

In the present disclosure, the electric module 1 further includes a BDU (Battery Disconnect Unit) 16.

In one embodiment, the battery disconnect unit 16 is connected to a charging interface 2a of the battery module 2 through a hard copper bar.

In one embodiment, the battery disconnect unit 16 is connected to a discharging interface 2b of the battery module 2 through a hard copper bar.

In one embodiment, the battery disconnect unit 16 is connected to an accessory interface 2c of the battery module 2 through a hard copper bar.

It should be noted that one, two or all of the above three technical features may be selected for setting. Specifically, when the three technical features are simultaneously selected for setting, the battery disconnect unit 16 is connected to the charging interface 2a of the battery module 2 through a first hard copper bar, the battery disconnect unit 16 is connected to the discharging interface 2b of the battery module 2 through a second hard copper bar, and the battery disconnect unit 16 is connected to the accessory interface 2c of the battery module 2 through a third hard copper bar.

Also, the battery disconnect unit 16 has a positive joint 16a connected to a positive terminal of the battery module 2 through a first copper-aluminum composite bar 17 and a negative joint 16b connected to a negative terminal of the battery module 2 through a second copper-aluminum composite bar 18.

In the present disclosure, the first copper-aluminum composite bar 17 and the second copper-aluminum composite bar 18 are both composed of an aluminum bar and a copper bar. A material of the aluminum bar is 1060 O-state aluminum, and a material of the copper bar is red copper soft copper bar.

In the present disclosure, the first copper-aluminum composite bar 17 and the second copper-aluminum composite bar 18 are both composed of an aluminum bar connected to the positive terminal or the negative terminal of the battery module by welding, and a copper bar connected to the positive joint 16a or the negative joint 16b of the battery disconnect unit by bolts. As such, the output electrode holder may be saved, the locking screw process may also be saved, and the production efficiency may be improved. Meanwhile, the copper bar takes the form of soft copper bar and is connected to the positive joint 16a and the negative joint 16b of the BDU by using bolts, so that the soft copper bar may absorb assembly tolerances in terms of a manufacturing process and is convenient to install, and the connection in which the soft copper bar is used may absorb a pulling force well during driving, thereby avoiding a risk of breaking or current-leakage of a high-voltage loop due to the pulling force.

It should be noted that either or both of the above two technical features may be selected for setting.

Specifically, the battery disconnect unit 16 is connected to the charging interface 2a of the battery module 2 through a 20*3mm² hard copper bar, the battery disconnect unit 16 is connected to the discharging interface 2b of the battery module 2 through a 20*3mm² hard copper bar. In the copper-aluminum composite bar, a 25*4mm² aluminum bar is used to connect the positive terminal or the negative terminal of the battery module 2, and a 20*3mm² soft copper bar is used to connect the positive joint 16a or the negative joint 16b of the battery disconnect unit 16. And the battery disconnect unit 16 is connected to the accessory interface 2c of the battery module 2 through a 6mm² copper cable.

According to a second aspect, an embodiment of the present disclosure further provides a battery pack 100 including one or more battery modules 2 and an electrical module 1. It should be noted that the electric module 1 is the above-mentioned electric module 1, that is, the electric module 1 has all the technical features of the above-mentioned electric module 1, i.e., the battery pack 100 includes all the embodiments of the above-mentioned electric module 1, and in turn the beneficial effects brought about by the above-mentioned electric module 1. One or more voltage signals and/or one or more temperature signals of the cell groups 21 are collected by the cells contact system 11, and one or more analog front ends 131 are disposed in the cell supervision circuit 13. Because a collection interface of the cells contact system 11 is relatively close to a port of the cell supervision circuit 13, the cells contact system 11 may be communicatively connected with the cell supervision circuit 13 through the plugging unit 14, and the analog voltage and/or temperature signals collected by the cells contact system 11 are converted into digital signals by the analog front ends 131 and transmitted to the battery management unit 12 after being transmitted to the cell supervision circuit 13 through the plugging unit 14. With this arrangement, the transmission paths of the analog signals between the cells contact system 11 and the analog front ends 131 are shortened, thereby reducing transmission path interference and improving the accuracy of voltage and temperature collections.

In one embodiment, the battery pack 100 further includes a plurality of the battery modules 2 connected in series. Herein, the battery disconnect unit 16 of the electric module 1 includes a main fuse 161 connected in series between two adjacent ones of the battery modules 2.

It will be appreciated that, based on the above-described embodiments, referring to FIG. 6, a high-voltage connection relationship of the battery pack 100 is as follows.

A discharge loop of the battery pack 100 is as follows. A positive electrode of the discharging interface 2b → BDU: P+ (discharge +) → BDU internal: main positive relay 152 → BDU: B+ (battery input +) →global positive electrode of the battery modules → 1/2 battery modules 2 → main fuse 161 → 1/2 battery modules 2 →global negative electrode of the battery modules → BDU: B- (battery input -) → current sensor 155 → main negative relay 153 → BDU: P&C- (charge/discharge -) → a negative electrode of the discharging interface 2b.

A charging loop of the battery pack 100 is as follows. A positive electrode of the charging interface 2a → BDU: C+ (charging +) → BDU internal: fast charging relay 154 → BDU internal: main positive relay 152 → BDU: B+ (battery input +) → global positive electrode of the battery modules → 1/2 battery modules 2 → main fuse 161 -> 1/2 battery modules 2→ global negative electrode of the battery modules → BDU: B- (battery input -) → current sensor 155 → main negative relay 153 → BDU: P&C- (charging/discharging -) → a negative electrode of the charging interface 2a. The accessory loop is arranged in parallel with the discharging interface 2b.

It will be appreciated that in conventional designs, the fuse is generally integrated into the BDU, and when there is a short circuit between the positive electrode and the negative electrode of the discharging interface 2b, the main fuse 161 may be blown for protection. However, when a short circuit occurs at the rear end of the fuse, for example, between BDU B+ and BDU B-, because the fuse is located at the rear end of the short circuit, the current forms a loop from the global positive electrode of battery modules → the battery module 2 → the global negative electrode of battery modules, and the current does not pass through the fuse, which breaks and cuts off the short-circuit current, thereby causing a high-voltage risk accident. In the present disclosure, because the main fuse 161 is connected in series between two of the battery modules 2, the current path is from the global positive electrode of battery modules → 1/2 battery modules 2 → main fuse 161 -> 1/2 battery modules 2 → the global negative electrode of battery modules, and the short-circuit current flows through the fuse. When the short circuit occurs, the fuse is blown and the current is cut off. As such, not only the external short circuit of the battery pack 100 may be effectively protected against, but also the internal short circuit of the battery pack 100 may be effectively protected against.

Specifically, the two adjacent ones of the battery modules 2 are connected by a 25*4mm² aluminum bar, which is made of 1060 O-state aluminum.

Embodiments of the present disclosure have been described in detail, and specific examples have been used herein to illustrate the principles and implementations of the present disclosure. The description of the above embodiments is merely used to assist in understanding the methods of the present disclosure and its core idea. At the same time, variations in the embodiments and scope of application will occur to a person of ordinary skills in the art in accordance with the teachings of the present disclosure. In light of the foregoing, the contents of the specification shall not to be construed as limiting the present disclosure.

## Claims

1. An electrical module (1), **characterized in that** the electric module (1) comprises:
a cells contact system (11) configured to collect one or more voltage signals and/or one or more temperature signals of a number of cell groups (21) in a battery module (2);
a battery management unit (12); and
a cell supervision circuit (13) including one or more analog front ends (131) configured to convert one or more analog signals of the battery module (2) collected by the cells contact system (11) into one or more digital signals, the one or more analog front ends (131) being communicatively connected to the battery management unit (12);
wherein the cell supervision circuit (13) is connected directly with the cells contact system (11).

2. The electric module (1) of claim 1, **characterized in that** the cell supervision circuit (13) is connected directly with the cells contact system (11) through a plugging unit (14), the plugging unit (14) includes a plug (141) and a receptacle (142), one of the plug (141) and the receptacle (142) being disposed in the cells contact system (11) and another one of the plug (141) and the receptacle (142) being disposed in the cell supervision circuit (13), the plug (141) being plugged into and mated with the receptacle (142).

3. The electric module (1) of claim 2, **characterized in that** the cells contact system (11) includes an integrated busbar (111) disposed on the battery module (2), the integrated busbar (111) including:
a bracket (1111) disposed on the battery module (2);
a plurality of aluminum bars (1112), each of the aluminum bars (1112) connecting two adjacent cells in the battery module (2); and
a flexible circuit board assembly (1113) disposed on the bracket (1111), the flexible circuit board assembly (1113) including a circuit board (11131) and a plurality of temperature measuring units (11132), the plurality of temperature measuring units (11132) being electrically connected to the circuit board (11131) and configured to measure a temperature of the cell groups (21), the circuit board (11131) being connected to the aluminum bars (1112) through one or more nickel sheets;
wherein the plugging unit (14) is disposed between the circuit board (11131) and the cell supervision circuit (13).

4. The electric module (1) of claim 1, **characterized in that** the cell supervision circuit (13) includes a plurality of the analog front ends (131) configured to convert all of the voltage signals and/or the temperature signals within a single said battery module (2).

5. The electric module (1) of claim 1, **characterized in that** the one or more analog front ends (131) are communicatively connected to the battery management unit (12) through one or more daisy-chain communication cables (132).

6. The electric module (1) of claim 1, **characterized in that** the battery management unit (12) is disposed separately from the cell supervision circuit (13).

7. The electric module (1) of claim 6, **characterized in that** the cell supervision circuit (13) is disposed on one side of the battery module (2) in a first direction (F1);
the battery management unit (12) is disposed on one side of the battery module (2) in a second direction (F2).

8. The electric module (1) of claim 1, **characterized in that** the electric module (1) further comprises a high-voltage control unit (15) communicatively connected to the battery management unit (12) through a daisy-chain communication cable (132) to transmit one or more collected high-voltage loop signals to the battery management unit (12).

9. The electric module (1) of claim 1, **characterized in that** the electrical module (1) further comprises a battery disconnect unit (16), wherein:
the battery disconnect unit (16) is connected to a charging interface (2a) of a battery pack (100) through a first hard copper bar; and/or
the battery disconnect unit (16) is connected to a discharging interface (2b) of the battery pack (100) through a second hard copper bar; and/or
the battery disconnect unit (16) is connected to an accessory interface (2c) of the battery pack (100) through a third hard copper bar.

10. The electric module (1) of claim 9, **characterized in that** the battery disconnect unit (16) has a positive joint connected to a positive terminal of the battery module (2) through a first copper-aluminum composite bar (17) and a negative joint connected to a negative terminal of the battery module (2) through a second copper-aluminum composite bar (18).

11. The electric module (1) of claim 10, **characterized in that** the first copper-aluminum composite bar (17) and the second copper-aluminum composite bar (18) are both composed of an aluminum bar and a copper bar, a material of the aluminum bar is 1060 O-state aluminum, and a material of the copper bar is red copper soft copper bar; and/or
the first copper-aluminum composite bar (17) and the second copper-aluminum composite bar (18) are both composed of an aluminum bar and a copper bar, the aluminum bar is connected to a positive terminal or a negative terminal of the battery module (2) by welding, and the copper bar is connected to a positive joint or a negative joint of the battery disconnect unit (16) by bolts.

12. A battery pack (100), **characterized in that** the battery pack (100) comprises:
one or more battery modules (2);
the electric module (1) of any one of claims 1 to 11.

13. The battery pack (100) of claim 12, **characterized in that** the battery pack (100) further comprises a plurality of the battery modules (2) connected in series;
wherein the battery disconnect unit (16) of the electrical module (1) includes a main fuse (16) connected in series between two adjacent ones of the battery modules (2).

14. The battery pack (100) of claim 13, **characterized in that** the battery pack (100) has a charging interface (2a) and a discharging interface (2b);
the battery pack (100) being formed with a discharging loop which passes sequentially through a positive electrode of the discharging interface (2b), a discharging positive electrode of the battery disconnect unit (16), a main positive relay (162) of the battery disconnect unit (16), a battery input positive electrode of the battery disconnect unit (16), a global positive electrode of the battery modules (2), the battery modules (2), a main fuse (161) of the battery disconnect unit (16), the battery modules (2), a global negative electrode of the battery modules (2), a battery input negative electrode of the battery disconnect unit (16), a current sensor (165), a main negative relay (163) of the battery disconnect unit (16), a discharging negative electrode of the battery disconnect unit (16), and a negative electrode of the discharging interface (2b).

15. The battery pack (100) of claim 13, **characterized in that** the battery pack (100) has a charging interface (2a) and a discharging interface (2b);
the battery pack (100) being formed with a charging loop which passes sequentially through a positive electrode of the charging interface (2a), a charging positive electrode of the battery disconnect unit (16), a fast charging relay (164) of the battery disconnect unit (16), a main positive relay (162) of the battery disconnect unit (16), a battery input positive electrode of the battery disconnect unit (16), a global positive electrode of the battery modules (2), the battery modules (2), a main fuse (161) of the battery disconnect unit (16), the battery modules (2), a global negative electrode of the battery modules (2), a battery input negative electrode of the battery disconnect unit (16), a current sensor (165), a main negative relay (163) of the battery disconnect unit (16), a discharging negative electrode of the battery disconnect unit (16), and a negative electrode of the charging interface (2a).
